# FASCICULE DE BREVET EUROPEEN

(11) **EP 3 717 798 B1**
(45) Date de publication et mention de la délivrance du brevet: **07.06.2023**
(21) Numéro de dépôt: 18827178.7
(22) Date de dépôt: 19.11.2018
(51) Int. Cl.: F16H 25/20

(54) **VERIN ELECTRIQUE**
ELEKTRISCHER AKTUATOR
ELECTRIC ACTUATOR

(30) Priorité: 27.11.2017 FR 1761240
(43) Date de publication de la demande: 07.10.2020
(73) Titulaire: Arceo Technologies, 80300 Meaulte (FR)
(72) Inventeur: BEVILACQUA, Cateno, 80300 Mametz (FR); FRANCOIS, Jean-Charles, 80000 Amiens (FR)
(74) Mandataire: Dennemeyer & Associates S.A.
(86) Numéro de dépôt international: PCT/FR2018/052901
(87) Numéro de publication internationale: WO 2019/102119

(56) Documents cités:
- WO-A1-2008/047066
- WO-A1-2013/135052
- WO-A1-2017/201616
- US-A- 2 913 910
- US-A- 5 404 767

## Description

La présente invention concerne un vérin électrique.

Un tel type de vérin comporte, généralement, un moteur électrique dont la rotation de l'arbre de sortie induit un mouvement de translation rectiligne d'un organe mobile, typiquement un piston ou une tige, par un ensemble constitué d'une vis et d'un écrou. L'écrou est immobilisé en rotation et guidé en translation, son déplacement étant induit par la rotation de la vis qui, elle, est immobile en translation et libre en rotation. De facto, un tel type de vérin est en fait un vérin mécanique dont la mise en mouvement de la partie mobile est assurée par un moteur électrique. Pour faciliter la lecture, on utilisera par la suite le terme de vérin électrique pour désigner ce type de vérin.

Un vérin dit électrique comprend peu de pièces, donc présente une maintenance et une mise en oeuvre aisées tout en étant non polluant. On peut citer FR-A-2 678 597, EP-A-2 827 478 comme décrivant de tels vérins. En revanche, un vérin électrique, tel que connu de l'état de la technique, ne permet pas de générer des efforts importants. Son emploi s'en trouve donc limité. Pour remédier à cette limite d'utilisation, on connait des vérins hydrauliques qui transforment l'énergie hydraulique, la pression et le débit d'un fluide, par exemple de l'huile, en énergie mécanique. On connait par US-A-5 404 767 un vérin de ce type avec deux tiges filetées entrainant chacune en translation un écrou associé à un organe de poussée. Le mouvement des tiges est induit par un moteur électrique. Un vérin hydraulique nécessite de nombreuses pièces, une infrastructure pour assurer la circulation du fluide, un réservoir aux dimensions adaptées aux performances du vérin hydraulique et la présence d'une pompe. Ce type de vérin, outre un encombrement important, est d'une maintenance complexe du fait du nombre d'éléments nécessaires à son fonctionnement. De plus, un vérin hydraulique est potentiellement polluant, le risque de fuite de fluide étant élevé. Ainsi, il existe un besoin en un type de vérin aisé à maintenir, non polluant, nécessitant peu de pièces et générant des efforts importants dans un encombrement optimal.

C'est à ces besoins qu'entend plus particulièrement remédier l'invention en proposant un vérin électrique, réalisé avec un nombre optimal de pièces, d'un encombrement réduit et permettant de générer des efforts au moins identiques à ceux obtenus avec un vérin hydraulique.

A cet effet, l'invention a pour objet un vérin électrique selon la revendication 1.

Ainsi, la présence d'au moins deux tiges filetées entrainant en translation, par l'intermédiaire d'au moins deux écrous solidaires des tiges filetées, un organe de poussée permet de générer des efforts importants, cela tout en contenant la puissance et les dimensions du vérin par rapport à la puissance et aux dimensions habituellement rencontrés pour un vérin électrique. En effet, en réalisant un vérin électrique ayant plusieurs tiges filetées participant chacune au déplacement en translation de l'organe de poussée, cela permet de générer une poussée plus importante qu'avec un vérin électrique classique, équipé d'un moteur électrique comparable, pourvu d'une seule tige filetée.

Grâce à l'invention, on peut réaliser un vérin électrique dont les performances sont comparables à celles d'un vérin hydraulique, voire, dans certains cas, supérieures à un tel vérin. De plus, l'installation et l'entretien d'un vérin conforme à l'invention sont simplifiés. Un tel vérin, donc avec une alimentation électrique véhiculant uniquement la puissance et la commande du vérin, est particulièrement adapté pour une utilisation en milieu dit hostile, que ce milieu soit ouvert ou fermé. A titre d'exemples non limitatifs, on peut rencontrer ce type de milieu dans les industries chimiques, pharmaceutiques, agricoles, agroalimentaires, nucléaires, ferroviaires, aéronautiques, spatiales, automobiles, maritime ou autres.

Selon des aspects avantageux mais non obligatoires de l'invention, un tel vérin peut comprendre une ou plusieurs des caractéristiques suivantes:
- il comprend trois tiges filetées.
- Les trois tiges filetées sont régulièrement réparties autour de l'organe de poussée ce dernier matérialisant l'axe longitudinal du vérin.
- Les branches de chaque anneau sont pourvues d'une gorge recevant un bord de l'organe de liaison avec l'extrémité de l'organe de poussée.
- L'organe de liaison est inséré avec un jeu défini dans la gorge, par coopération de formes.
- L'organe de liaison comprend un ergot adapté pour s'insérer dans un alésage ménagé dans un organe de liaison, constitutif de l'ensemble, solidaire de l'extrémité de l'organe de de poussée.
- Le vérin comporte trois ensembles de pièces identiques reliant les trois écrous montés sur les trois tiges filetées à l'extrémité de l'organe de poussée.

L'invention sera mieux comprise et d'autres avantages de celle-ci apparaitront plus clairement à la lecture de la description qui va suivre de plusieurs modes de réalisation de l'invention, donnée à titre d'exemple non limitatif et faite en référence aux dessins suivants dans lesquels:
- La figure 1 est une vue latérale d'un vérin conforme à un mode de réalisation de l'invention,
- la figure 2 est une vue schématique, à une autre échelle, du fonctionnement d'un vérin conforme à un mode de réalisation de l'invention,
- la figure 3 est une vue en perspective et à une plus grande échelle, du vérin de la figure 1, sans son enveloppe externe,
- la figure 4 est une vue en perspective, à plus grande échelle de la zone de liaison d'un écrou avec l'organe de poussée, certaines pièces entourant l'écrou étant illustrées en traits fantôme pour faciliter la lecture et
- la figure 5 est une vue en perspective à plus grande échelle de l'écrou, de l'organe de guidage dans l'enveloppe et de l'organe de liaison avec l'organe de poussée.

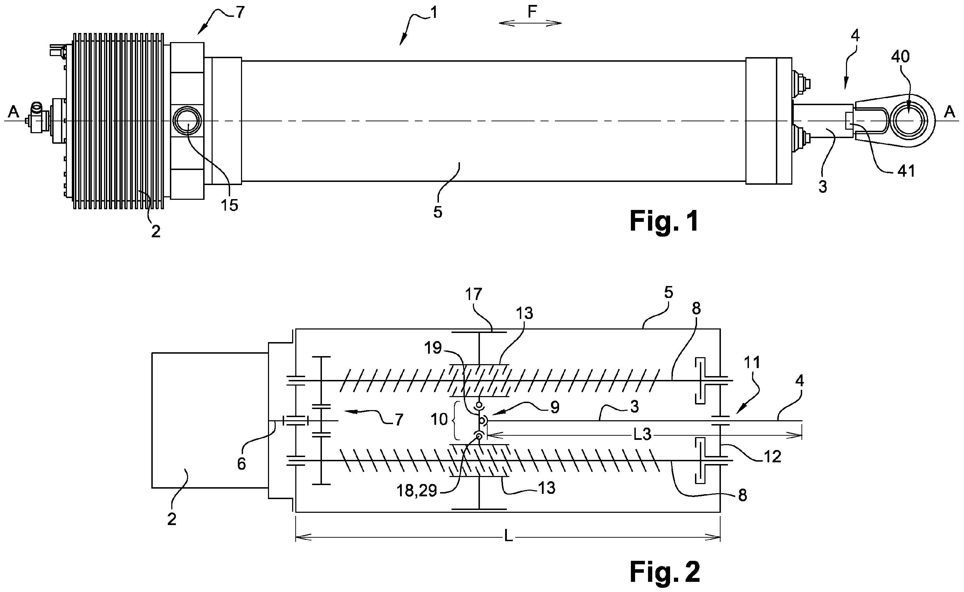

La figure 1 illustre un premier mode de réalisation d'un vérin 1 conforme à l'invention. Le vérin 1 est un vérin électrique réalisé en un matériau résistant à la corrosion et aux conditions environnementales dans lesquelles est placé le vérin 1. Le matériau constitutif du vérin 1 présente des caractéristiques de résistance mécanique adaptées aux performances voulues du vérin. Avantageusement, le vérin 1 est en acier, en alliages d'acier ou en un alliage à base d'aluminium.

Le vérin 1 est de forme extérieure allongée, globalement configuré en cylindre à base circulaire. En variante, il est d'une autre forme extérieure, par exemple, allongé à base triangulaire, rectangulaire, carrée ou autre. Il comprend un moteur, ici un moteur électrique 2, alimenté par une source extérieure non illustrée. Un tel moteur électrique est connu en soi et ne sera pas décrit plus précisément.

Le moteur 2 entraine en rotation des organes d'entrainement en translation d'un organe de poussée 3. Cet organe de poussée est configuré en barre cylindrique à base circulaire. Ici la barre 3 est pleine. Dans une variante non illustrée, elle est creuse.

La barre ou organe de poussée 3 est avantageusement en un matériau métallique, par exemple, en un matériau métallique identique à celui majoritairement constitutif du vérin 1. En variante, la barre 3 est en un matériau métallique différent des matériaux métalliques constitutifs du vérin 1. Dans un autre mode de réalisation non illustré, l'organe de poussée 3 est en un matériau composite à base de polymères.

A la figure 1, seule une extrémité libre 4 de la barre 3 est visible, les autres éléments constitutifs de l'organe de poussée et du vérin 1 étant dissimulés dans une enveloppe externe de protection 5. C'est l'enveloppe externe 5 qui donne au vérin 1 sa forme extérieure allongée, l'enveloppe 5 étant cylindrique à base circulaire. En variante non illustrée, la forme de l'enveloppe 5 est différente de celle représentée. A titres d'exemples, l'enveloppe 5 peut être à base carrée, octogonale ou triangulaire.

Outre l'aspect visuel du vérin 1, l'enveloppe 5 participe à la rigidité mécanique du vérin 1. Par ailleurs, l'enveloppe externe 5 assure, dans certaines cas, une transmission partielle des efforts subis par le vérin 1 au socle ou base, non illustré, sur lequel le vérin 1 est fixé. Dans tous les cas, comme évoqué précédemment, si la forme de l'enveloppe externe 5-donc l'aspect extérieur du vérin 1- est variable, les éléments constitutifs du vérin 1 logés dans l'enveloppe 5 sont globalement configurés pour former un cylindre.

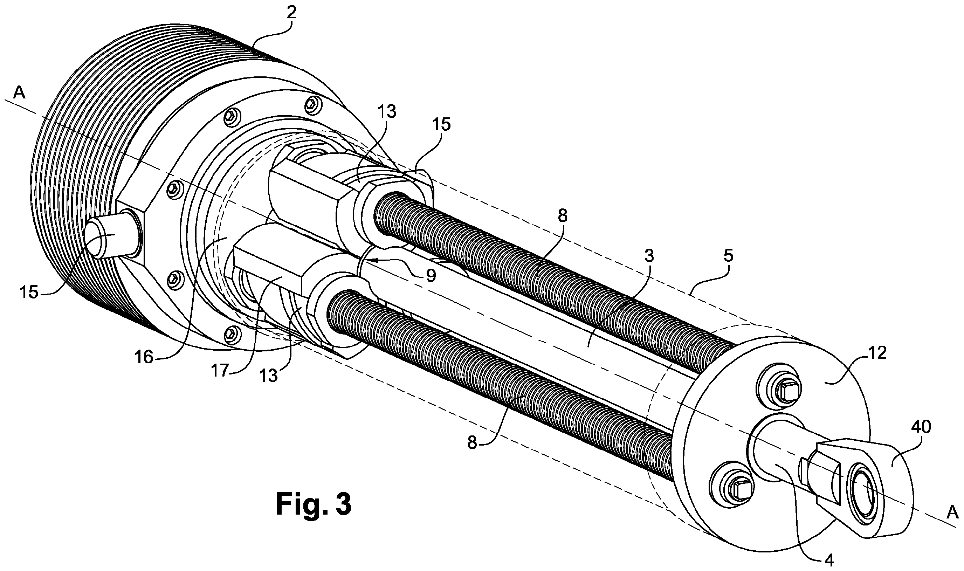

L'extrémité 4 de la barre 3, particulièrement visible aux figures 1 et 3, est ici équipée d'un oeilleton 40 monté pivotant sur un arbre 41 fixé à la tranche d'extrémité de la barre 3. L'oeilleton 40 permet ainsi le passage d'un crochet ou de tout autre dispositif amovible de liaison permettant de relier le vérin 1 à l'objet sur lequel on souhaite exercer une poussée et/ou une traction.

En référence aux figures 1 à 3, on note que la rotation de l'arbre du moteur électrique 2 induit, indirectement, un mouvement de translation de l'organe de poussée 3 selon la double flèche F. Ce mouvement de translation est effectué selon une direction parallèle à l'axe longitudinal AA du vérin 1. Un tel vérin 1 permet de produire une course de l'extrémité 4 de la barre 3 sur une distance allant d'un mètre à sept mètres, à une vitesse variable allant de zéro à deux mètres par minute et propre à générer une poussée allant d'une tonne à quarante tonnes.

Un vérin 1 est ainsi à même de déplacer des objets relativement lourds, sans autre contrainte que la présence d'une alimentation électrique. A titre d'exemples non limitatifs, on peut citer des objets à déplacer dans le domaine ferroviaire, maritime, spatial, aéronautique, énergétique, nucléaire, pharmaceutique, agro-alimentaire, agricole, chimique, sidérurgique ou minier. Ces objets peuvent être des plateaux de tables élévatrices ou de machines-outils, des vantaux d'écluses, des portes ou capots de grandes dimensions tels que ceux rencontrés sur un navire, un train ou dans une installation énergétique ou nucléaire, des éléments constitutifs de machines ou d'autres objets.

Un vérin 1 conforme à l'invention permet un fonctionnement en milieu humide et/ou corrosif. En effet, l'absence de fluide, l'utilisation d'éléments mécaniques en mouvement, et le fait que l'ensemble du vérin 1 est dans une enveloppe 5 étanche à la poussière et à l'eau permet une telle utilisation dans de conditions environnementales particulièrement agressives. Ces caractéristiques couplées à la possibilité de réaliser une poussée élevée de plusieurs tonnes autorise une plage étendue d'utilisation, cela dans un encombrement réduit. A titre d'exemple, un vérin de 2 m de long et d'un diamètre de 0,3 m permet de générer une poussée maximale de 30 tonnes avec une course minimale de 1 m.

Pour obtenir de telles plages de poussée, on conçoit aisément que le moteur électrique 2 a une puissance adaptée à la poussée voulue. Typiquement des essais effectués avec un moteur d'une puissance comprise entre 3 kW et 5kW sous une intensité de 5 A ont permis de générer une poussée maximale comprise entre 15 T et 30 T.

La figure 2 illustre, de manière schématique, le fonctionnement d'un tel vérin 1. L'arbre de rotation 6 du moteur électrique 2 entraine en rotation, par un jeu 7, connu en soi, de pignons et de roues dentées, au moins deux tiges filetées 8.

Dans le mode de réalisation décrit, le nombre de tiges filetées 8 est de trois, étant entendu que seules deux tiges sont visibles aux figures 2 et 3, compte tenu de l'angle de vision. Un nombre de trois tiges filetées permet de générer une poussée suffisante, sous un encombrement maitrisé tout en préservant un nombre optimal d'éléments constitutifs du vérin 1. On conçoit que le nombre de tiges filetées 8 peut être différent, par exemple de quatre tiges filetées, étant entendu que le minimum est, dans tous les cas, de deux tiges filetées 8.

Ces tiges filetées 8 sont entrainées en rotation tout en étant immobiles en translation dans le vérin 1. Elles sont disposées dans l'enveloppe de protection 5 parallèlement à la plus grande dimension du vérin 1, en l'espèce la longueur L du cylindre formant l'enveloppe 5 du vérin 1. En l'espèce, les tiges 8 occupent sensiblement toute la longueur L de l'enveloppe 5. Les trois tiges 8 sont régulièrement réparties autour de l'axe AA et parallèlement à ce dernier.

Entre les trois tiges filetées 8, en position centrale, se trouve l'organe de poussée 3. Celui-ci est orienté parallèlement aux tiges filetées 8. En d'autres termes, l'organe de poussée 3 matérialise l'axe géométrique AA.

La longueur L3 de l'organe 3 est supérieure à celle des tiges filetées 8. De la sorte, en position dite de repos, l'organe de poussée 3 est majoritairement rentré dans l'enveloppe 5 du vérin 1, seule son extrémité 4 pourvue de l'oeilleton 40 restant visible et accessible. Il convient de noter que cette position, dite de repos, est différente d'une autre position dite inactive. Dans ce cas, l'organe de poussée 3 est immobile mais il peut alors se trouver plus ou moins sorti de l'enveloppe 5. L'organe de poussée 3 est alors non pas immobile à un point mort de sa course mais en un point quelconque entre ses deux points morts. Une telle position dite inactive permet de garder la position de l'organe de poussée 3, en générant un effort défini. Ainsi, on bloque le vérin 1 en une position quelconque lors de sa course tout en maintenant l'effort de poussée sur l'élément auquel est relié le vérin 1. Cette caractéristique d'irréversibilité permet le maintien et le blocage en une position donnée du vérin, associé à un dispositif de blocage en rotation du moteur électrique. Une telle caractéristique est un élément important de la sécurité de fonctionnement de l'invention.

Pour éviter toute réversibilité du mouvement, dans une configuration où le vérin 1 est en position inactive, le moteur électrique 2 n'est plus alimenté et il y a auto-verrouillage du vérin 1. En d'autres termes, lorsque l'on coupe l'alimentation du moteur 2, l'organe de poussée 3 reste au à l'endroit où il se trouve, sans possibilité d'avancer ou de reculer, par sécurité. Pour réinitialiser un mouvement de l'organe de poussée 3, il est nécessaire de réalimenter le moteur électrique 3 et si besoin, de réarmer certains dispositifs de sécurité.

On conçoit que des dispositifs de sécurité assurent automatiquement la coupure de l'alimentation électrique, et donc l'immobilisation de l'organe de poussée 3, à l'endroit où il se trouve le long de sa trajectoire. De même, des dispositifs d'alerte, par exemple visuel et/ou sonore, sont prévus lorsque le vérin 1 approche d'un point mort de sa course. D'autres dispositifs d'alerte et/ou des capteurs, assurent une transmission, filaire ou non, de données à l'utilisateur. Ces dispositifs et/ou capteurs sont prévus pour signaler tout changement lors de la poussée, tel qu'une résistance soudaine à la poussée, une modification des conditions environnementales (température, humidité, pH ou autre), un disfonctionnement du moteur 2 ou d'une pièce constitutive du vérin.

L'organe de poussée 3 est donc immobile en rotation et mobile en translation, selon une direction, illustrée par la double flèche F. A cet effet, l'organe de poussée 3 est fixé, par une extrémité 9, opposée à son extrémité libre 4, sur un ensemble de pièces 10. Les pièces constitutives de cet ensemble 10 sont décrites plus loin dans le texte, en référence particulièrement aux figures 3 à 5.

L'organe de poussée 3 est donc guidé dans son déplacement en translation par, d'une part, par l'ensemble 10 et, d'autre part, par un orifice de sortie 11 ménagé dans la tranche d'extrémité 12, pleine, de l'enveloppe de protection 5. Les pièces constitutives de l'ensemble 10 sont également solidarisées aux trois écrous 13 montés sur les tiges filetées 8. Cette liaison est adaptée de sorte que tout déplacement en translation des écrous 13 se répercute immédiatement à l'organe de poussée 3 qui est entrainé en translation par les pièces de l'ensemble 10. L'ensemble 10 assure une rotation synchronisée, homogène et régulière des tiges 8, donc une translation synchrone, homogène et régulière des écrous 13. Cela assure une poussée homogène et régulière de plusieurs tonnes sur des distances allant jusqu'à 7 m, cela en préservant la résistance mécanique des éléments du vérin.

Chacun des trois écrous 13 est immobile en rotation et guidé en translation le long de la tige filetée 8 sur laquelle il est monté. Les écrous 13 sont bloqués en rotation dans l'enveloppe 5 par des organes de blocage 17. Ces organes de blocage 17 seront détaillés plus en avant dans le texte. En d'autres termes, toute rotation des trois tiges filetées 8 entraine une translation des trois écrous 13 et donc une translation de l'organe de poussée 3, cela selon la direction F. Ici, les tiges filetées 8 sont identiques, il en est de même pour les écrous 13. En variante, toutes les tiges filetées 8 et/ou tous les écrous 13 ne sont pas identiques, en particulier les matériaux constitutifs des écrous sont différents de ceux des tiges filetées. En variante, les dimensions d'au moins une tige filetée sont différentes des autres tiges, ce qui entraine de facto une différence dans les dimensions de l'écrou correspondant.

Grâce à l'invention, la présence d'au moins deux, ici trois, tiges filetées 8 permet de générer des efforts plus importants que ceux observés avec une seule tige filetée, qui plus est, constitue en elle-même l'organe de poussée.

Si la figure 2 est un diagramme simplifié permettant de visualiser le principe de fonctionnement du vérin 1, la figure 3 illustre les différentes pièces constitutives du vérin 1 permettant le fonctionnement du vérin 1, selon le mode de réalisation décrit à la figure 2, à savoir avec trois tiges filetées 8. A la figure 3, l'enveloppe de protection 5 a été retirée pour faciliter la lecture.

Outre les organes déjà décrits précédemment, on note la présence de deux tourillons 15, diamétralement disposés entre le moteur électrique 2 et les tiges filetées 8, au niveau du jeu 7 de pignons. Ces derniers ne sont pas visibles à la figure 3, un capot de protection 16 étant en place. Les deux tourillons 15 définissent un organe de fixation du vérin 1 sur un châssis, non illustré, ce dernier étant fixé et immobilisé sur un socle défini, par exemple une partie d'une machine, d'un véhicule ou encore d'une construction.

A la figure 3, on note que la liaison entre les écrous 13 et l'extrémité 9 de la barre 3 est de type complexe, mettant en oeuvre plusieurs pièces mobiles constitutives de l'ensemble 10. En effet, selon le principe de fonctionnement du vérin 1 objet de l'invention, la rotation simultanée des tiges filetées 8 doit s'accompagner également d'un déplacement synchronisé des trois écrous 13. Ce point est particulièrement important pour éviter toute torsion et/ou blocage du déplacement des éléments constitutifs du vérin 1 qui sont mobiles en translation, à savoir les écrous 13 et l'organe de poussée 3. Il convient donc d'utiliser des éléments adaptés pour assurer un déplacement régulier et identique de tous les écrous 13, ceci afin d'obtenir une poussée optimale, sans risque de rupture d'un élément constitutif du vérin 1.

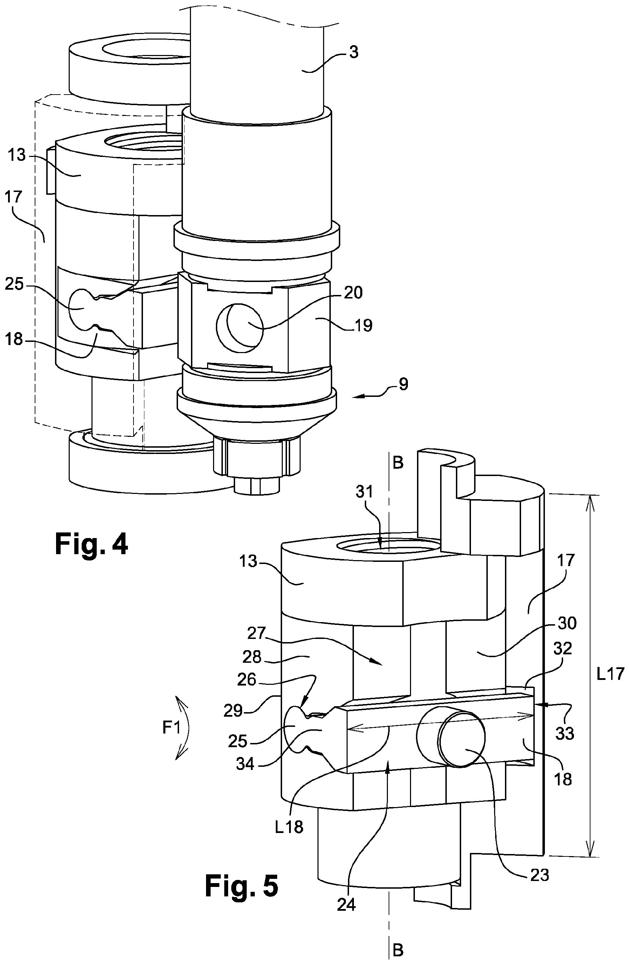

Les figures 4 et 5 illustrent particulièrement les pièces développées dans le cadre de l'invention et permettant de réaliser et d'utiliser un vérin 1. Chaque écrou 13 est associé à un organe de blocage en rotation 17 dédié, constitutif de l'ensemble 10. Cet organe de blocage 17 assure également le guidage en translation de l'écrou 13 dans l'enveloppe 5, tout en empêchant la rotation de l'écrou, cela par coopération et complémentarité de formes. Ici, le fonctionnement de l'organe de blocage en rotation 17 sera décrit plus loin.

Chaque écrou 13 est également associé à un organe de liaison 18, constitutif également de l'ensemble 10, adapté pour assurer une liaison entre l'écrou 13 et l'extrémité 9 de l'organe de poussée 3. L'organe de liaison 18 est monté de sorte à autoriser un jeu défini entre l'écrou 13 et l'extrémité 9 de l'organe de poussée 3 lors des déplacements conjoints de l'écrou 13 et de l'organe de poussée 3. La présence d'un tel jeu est nécessaire pour assurer un mouvement de translation régulier en évitant, ou du moins en limitant, les frottements, les à-coups et/ou les oscillations de l'organe de poussée 3 lors de son déplacement.

La présence de l'organe de liaison 18 participe donc à la réalisation d'un déplacement en translation régulier et homogène de l'organe de poussée 3 lorsque les trois écrous 13, régulièrement répartis autour de l'organe de poussée 3, donc autour de l'axe longitudinal AA du vérin 1, se déplacent en translation le long des tiges filetées 8 qui les portent. Les différents organes de liaison entre un écrou 13 et l'organe de poussée 3, donc de facto constitutif de l'ensemble 10, sont maintenant décrits plus précisément, toujours en référence aux figures 4 et 5.

Comme cela apparait à la figure 4, l'extrémité 9 de l'organe de poussée 3 comprend un organe de liaison 19 qui entoure, au moins partiellement, l'extrémité 9. L'organe 19 est également constitutif de l'ensemble 10 de pièces participant à la translation guidée de l'organe de poussée 3 sous l'action des tiges filetées 8 et des écrous 13. Cet organe de liaison 19, globalement en forme de bague ou d'anneau ouvert, est pourvu d'autant d'alésages 20 qu'il y a d'écrous 13.Par la suite le terme bague pour désigner l'organe de liaison 19 sera utilisé, pour faciliter la lecture. En l'espèce, la bague 19 comporte trois alésages 20 régulièrement répartis sur la périphérie de la bague 19. La bague 19 est adaptée pour assurer une liaison entre l'extrémité 9 de l'organe de poussée 3 et les écrous 13, tout en autorisant un jeu prédéfini entre l'extrémité 9 et les écrous 13. Pour cela, la bague 19 est adaptée pour rester en une position prédéterminée par rapport aux écrous 13 et à l'extrémité 9 de l'organe de poussée 3. En d'autres termes, la bague 19 est adaptée pour suivre les mouvements de l'extrémité 9.

Chaque alésage 20 de la bague 19 reçoit un ergot 23. Chaque ergot 23 est de forme complémentaire à celle de l'alésage 20. En l'espèce, il est cylindrique à base circulaire. En variante, il est d'une autre forme pour autant que cette forme soit complémentaire de celle de l'alésage 20.

Chaque ergot 23 est fixé, avantageusement venu de matière, par une de ses extrémités sur une face 24 de l'organe de liaison 18, sensiblement en position centrale sur la face 24. Chaque organe de liaison 18, constitutif de l'ensemble 10 et solidaire de l'écrou 13, est globalement en forme de coin, donc avec une section transversale globalement triangulaire. La base la plus large de la section de l'organe de liaison 18 est formée par la face 24. L'extrémité 25, opposée à la base 24, donc le sommet de la section triangulaire de l'organe de liaison 18, est arrondie. Compte tenu de la longueur L18 de l'organe 18, cette extrémité arrondie 25 forme un bord globalement cylindrique à section circulaire s'étendant sur toute la longueur L18 de l'organe 18. Ce bord cylindrique 25 est inséré dans une gorge 26 de forme complémentaire ménagée dans une face plane 27 d'une branche 28 d'un anneau ouvert 29. Cet anneau 29 participe donc à l'ensemble 10 de pièces assurant la liaison entre les écrous 13 et l'organe de poussée 3. L'anneau 29 est globalement en forme de la lettre grecque oméga. Cet anneau 29 enveloppe un écrou 13. La branche opposée 30 à la branche 28 est mitoyenne de l'organe de blocage en rotation 17. Comme cela ressort de figures 4 et 5, l'organe de blocage 17 définit une bride de maintien des différentes pièces constitutives de l'ensemble 10, à savoir l'organe de liaison 18, l'anneau 29. Cette bride de maintien est configurée globalement en goulotte allongée dont la section transversale correspond à une portion de cercle, d'un rayon adapté au rayon interne de l'enveloppe 5.

La partie 34 de l'organe 18 comprise entre la base 24 et l'extrémité arrondie 25 est de forme complexe, globalement avec des surfaces ondulées. Cette partie 34 forme le corps principal de l'organe 18. Elle est introduite dans la gorge 26 dont les parois internes ont une forme complémentaire à celle du corps 34. Comme cela apparait à la figure 5, les formes du corps 34 et de la gorge 26 autorisent, de manière limitée et contrôlée, un déplacement de l'ergot 23 de l'organe 18 dans le plan vertical, selon la double flèche F1. Ce mouvement est, de facto, un pivotement de l'ergot 23 autour du bord cylindrique 25, ce dernier définissant un axe de rotation. L'amplitude du pivotement est déterminée par l'amplitude des ondes ménagées dans les surfaces du corps 24 et de la gorge 26. Ainsi, lors du déplacement de chaque écrou 13 le long de sa tige filetée 8 on assure un déplacement régulier de l'ensemble 10 donc un déplacement de l'organe de poussée 3 coaxialement à l'axe principal longitudinal AA. Ce déplacement est réalisé avec un jeu limité et défini par l'organe 18, l'ergot 23 et la gorge 26.

En référence à la figure 3, on note qu'une bride 17 est disposée entre chaque écrou 13 et l'enveloppe 5, en ayant sa longueur L17 orientée parallèlement à l'axe central BB de l'orifice taraudée 31 de l'écrou 13 sur lequel elle est en appui. En d'autres termes, chaque bride 17 est orientée parallèlement à la tige filetée 8 et à l'organe de poussée 3 du vérin 1. Une rainure transversale 32, visible à la figure 5, est ménagée dans la bride 17. La rainure 32 reçoit une extrémité 33 de l'organe de liaison 18. De la sorte, on solidarise l'écrou 13, la goulotte 17, l'anneau ouvert 29 et l'organe de liaison 18. On définit de la sorte un ensemble 10 de pièces de liaison entre une tige filetée 8 et l'organe de poussée 3, étant entendu que chacun de trois ensembles de liaison entre les trois tiges filetées 8 et l'organe de poussée 3 est indépendant, tout en ayant un déplacement synchronisé avec les deux autres ensembles lors de l'utilisation du vérin 1.

De la sorte on réalise une poussée uniformément répartie de chaque écrou 13 sur l'extrémité 9 de l'organe de poussée 3, cela en tout point de la trajectoire de l'organe de poussée 3 lors de son déplacement. Outre un déplacement optimal de l'organe de poussée 3, on obtient une force de poussée importante résultant de l'utilisation simultanée et synchronisée de plusieurs écrous 13. Grâce à l'invention, non seulement on bénéficie d'une poussée plus importante avec un encombrement et une puissance maitrisés mais on obtient un mouvement régulier tout au long du déplacement de l'organe de poussée 3, quel que soit l'effort à exercer et les conditions d'utilisation.

## Revendications

1. Vérin électrique (1) comprenant:
- un moteur électrique (2),
- au moins deux tiges filetées (8) entrainées en rotation par le moteur électrique (2) au moyen d'un jeu de pignons et de roues dentées, et immobiles en translation,
- un écrou (13) bloqué en rotation et guidé en translation le long de chaque tige filetée (8), ledit écrou (13) étant entrainé en translation par la rotation des tiges filetées (8),
- un organe de poussée (3) mobile en translation (F) et mis en mouvement par le déplacement de l'écrou (13), les deux tiges filetées (8) entrainant chacune un écrou (13) en translation (F) le long de la tige filetée (8) sur laquelle est monté l'écrou (13), chaque écrou (13) entrainant en translation (F) ledit organe de poussée (3),
- un ensemble de pièces (10) comportant au moins un organe de blocage en rotation (17) de chaque écrou (13) et un organe de liaison (18), ledit ensemble (10) étant adapté pour assurer la liaison entre chaque écrou (13) et une extrémité (9) de l'organe de poussée (3) et le guidage en translation dudit organe de poussée (3), **caractérisé en ce que** l'ensemble (10) comprend un anneau ouvert (29) entourant chaque écrou (13) ledit anneau (29) participant à l'ensemble de pièces (10) assurant la liaison entre les écrous (13) et l'organe de poussée (3).

2. Vérin selon la revendication 1, **caractérisé en ce qu'**il comprend trois tiges filetées (8).

3. Vérin selon la revendication 2, **caractérisé en ce que** les trois tiges filetées (8) sont régulièrement réparties autour de l'organe de poussée (3) ce dernier matérialisant l'axe longitudinal (AA) du vérin (1).

4. Vérin selon la revendication 1, **caractérisé en ce que** les branches (28, 30) de chaque anneau (29) sont pourvues d'une gorge (26) recevant un bord (25) de l'organe de liaison (18) avec l'extrémité (9) de l'organe de poussée (3).

5. Vérin selon la revendication 4, **caractérisé en ce que** l'organe de liaison (18) est inséré avec un jeu (F1) défini dans la gorge (26), par coopération de formes.

6. Vérin selon la revendication 4, **caractérisé en ce que** l'organe de liaison (18) comprend un ergot (23) adapté pour s'insérer dans un alésage (20) ménagé dans un organe de liaison (19), constitutif de l'ensemble (10), solidaire de l'extrémité (9) de l'organe de de poussée (3).

7. Vérin selon l'une des revendications 3 à 6, **caractérisé en ce que** le vérin (1) comporte trois ensembles de pièces (10) identiques reliant les trois écrous (13) montés sur les trois tiges filetées (8) à l'extrémité (9) de l'organe de poussée (3).

## Patentansprüche

1. Elektrischer Aktuator (1), umfassend:
- einen Elektromotor (2),
- mindestens zwei Gewindestangen (8), die in Drehung von dem Elektromotor (2) mittels eines Satzes aus Ritzeln und Zahnrädern angetrieben werden und in Translation unbeweglich sind,
- eine Mutter (13), die in Drehung blockiert und in Translation entlang jeder Gewindestange (8) geführt ist, wobei die Mutter (13) in Translation von der Drehung der Gewindestangen (8) angetrieben ist,
- ein Schuborgan (3), das in Translation (F) beweglich ist und von der Verlagerung der Mutter (13) in Bewegung versetzt wird, wobei die zwei Gewindestangen (8) jeweils eine Mutter (13) in Translation (F) entlang der Gewindestange (8), auf der die Mutter (13) montiert ist, antreiben, wobei jede Mutter (13) das Schuborgan (3) in Translation (F) antreibt,
- eine Baugruppe von Teilen (10), die mindestens ein Drehblockierungsorgan (17) jeder Mutter (13) umfasst, und ein Verbindungsorgan (18), wobei die Baugruppe (10) dazu angepasst ist, die Verbindung zwischen jeder Mutter (13) und einem Ende (9) des Schuborgans (3) und die Führung in Translation des Schuborgans (3) sicherzustellen, **dadurch gekennzeichnet, dass** die Baugruppe (10) einen offenen Ring (29) umfasst, der jede Mutter (13) umgibt, wobei der Ring (29) an der Baugruppe von Teilen (10), die die Verbindung zwischen den Muttern (13) und dem Schuborgan (3) sicherstellt, beteiligt ist.

2. Aktuator nach Anspruch 1, **dadurch gekennzeichnet, dass** er drei Gewindestangen (8) umfasst.

3. Aktuator nach Anspruch 2, **dadurch gekennzeichnet, dass** die drei Gewindestangen (8) regelmäßig um das Schuborgan (3) verteilt sind, wobei dieses Letztere die Längsachse (AA) des Aktuators (1) verkörpert.

4. Aktuator nach Anspruch 1, **dadurch gekennzeichnet, dass** die Schenkel (28, 30) jedes Rings (29) mit einer Nut (26) versehen sind, die einen Rand (25) des Verbindungsorgans (18) mit dem Ende (9) des Schuborgans (3) aufnimmt.

5. Aktuator nach Anspruch 4, **dadurch gekennzeichnet, dass** das Verbindungsorgan (18) mit einem Spiel (F1), das in der Nut (26) definiert ist, durch Formschlüssigkeit eingefügt ist.

6. Aktuator nach Anspruch 4, **dadurch gekennzeichnet, dass** das Verbindungsorgan (18) einen Dorn (23) umfasst, der dazu angepasst ist, sich in eine Bohrung (20) einzufügen, die in einem Verbindungsorgan (19) angelegt ist, das ein Bestandteil der Baugruppe (10) ist, das mit dem Ende (9) des Schuborgans (3) fest verbunden ist.

7. Aktuator nach einem der Ansprüche 3 bis 6, **dadurch gekennzeichnet, dass** der Aktuator (1) drei identische Baugruppen von Teilen (10) umfasst, die die drei Muttern (13), die auf die drei Gewindestangen (8) an dem Ende (9) des Schutzorgans (3) montiert sind, verbinden.

## Claims

1. An electric actuator (1) comprising:
- an electric motor (2),
- at least two threaded rods (8) rotated by the electric motor (2) by means of a set of pinions and toothed wheels, and fixed in translation,
- a nut (13) rotationally immobilised and guided in translation along each threaded rod (8), said nut (13) being driven in translation by the rotation of the threaded rods (8),
- a pushing member (3) that can move in translation (F) and set in motion by the movement of the nut (13), the two threaded rods (8) each driving the translation (F) of a nut (13) along the threaded rod (8) on which the nut (13) is mounted, each nut (13) driving the translation (F) of said pushing member (3),
- an assembly of parts (10) including at least one member (17) for immobilising the rotation of each nut (13) and a connecting member (18), said assembly (10) being suitable for providing the connection between each nut (13) and one end (9) of the pushing member (3) and for guiding the translation of said pushing member (3), **characterised in that** the assembly (10) comprises an open ring (29) surrounding each nut (13), said ring (29) participating in the assembly of parts (10) providing the connection between the nuts (13) and the pushing member (3).

2. The actuator according to claim 1, **characterised in that** it comprises three threaded rods (8).

3. The actuator according to claim 2, **characterised in that** the three threaded rods (8) are regularly distributed around the pushing member (3), the latter forming the longitudinal axis (AA) of the actuator (1).

4. The actuator according to claim 1, **characterised in that** the legs (28, 30) of each ring (29) are provided with a groove (26) receiving an edge (25) of the connecting member (18) with the end (9) of the pushing member (3).

5. The actuator according to claim 4, **characterised in that** the connecting member (18) is inserted with a predefined clearance (F1) into the groove (26), in a form-locking manner.

6. The actuator according to claim 4, **characterised in that** the connecting member (18) comprises a lug (23) suitable for being inserted into a bore (20) made in a connecting member (19), constituting the assembly (10), rigidly connected with the end (9) of the pushing member (3).

7. The actuator according to one of claims 3 to 6, **characterised in that** the actuator (1) includes three assemblies of identical parts (10) connecting the three nuts (13) mounted on the three threaded rods (8) at the end (9) of the pushing member (3).
